# EUROPÄISCHE PATENTSCHRIFT

(11) **EP 0 860 319 B1**
(45) Veröffentlichungstag und Bekanntmachung des Hinweises auf die Patenterteilung: **11.06.2003**
(21) Anmeldenummer: 98101507.6
(22) Anmeldetag: 29.01.1998
(51) Int. Cl.: B60N 2/46, B60N 2/48

(54) **Rücksitzbank in einem Kraftfahrzeug**
Rear seat bench for motor cars
Banquette arrière pour automobiles

(30) Priorität: 25.02.1997 DE 19707477
(43) Veröffentlichungstag der Anmeldung: 26.08.1998
(73) Patentinhaber: Bayerische Motoren Werke Aktiengesellschaft, 80788 München (DE)
(72) Erfinder: Ehrbar, Günter, 82110 Germering (DE); Weiler, Bernhard, 81243 München (DE)

(56) Entgegenhaltungen:
- EP-A- 0 751 037
- EP-A- 0 770 512
- DE-A- 3 701 419
- DE-A- 4 222 921
- DE-C- 4 015 872
- DE-U- 29 700 979
- FR-A- 1 388 773
- GB-A- 2 301 279
- US-A- 5 484 189

## Beschreibung

Die Erfindung bezieht sich auf eine Rücksitzbank in einem Kraftfahrzeug der im Oberbegriff des Patentanspruchs 1 genannten und aus der DE-A-40 15 872 hervorgehenden Art.

Die aus dieser Druckschrift bekannte Kopfstütze ist über zwei Tragstangen an der Mittelarmlehne längsverlagerbar vorgesehen. Dabei wird die Kopfstütze bei hochgeschwenkter Mittelarmlehne von einem sich auf dem Mittelplatz der Rücksitzbank befindenden Fahrzeuginsassen manuell hochgeschoben. Dies wird jedoch oftmals aus Nachlässigkeit oder Vergesslichkeit nicht durchgeführt, so dass bei einem Fahrzeugcrash für den Fahrzeuginsassen keine optimale Schutzwirkung vorhanden ist.

Ferner ist in der US-A-5,484,189 eine an der Rückenlehne eines Fahrzeugsitzes vorgesehene Kopfstütze offenbart, deren Tragstange sich in einem rohrartigen, in der Rückenlehne angeordneten Gehäuse befindet. An diesem sind zwei einander zugewandte Auflagen ausgebildet, auf denen eine sich in einer Längsnut der Tragstange befindende und gegen diese in Ruhelage der Kopfstütze mit Vorspannung wirkende Druckfeder aufliegt, wobei die Tragstange über eine querverlaufende Schraube an einem am obenliegenden Endabschnitt des Gehäuses vorgesehenen Anschlag anliegt. Bei einer starken Fahrzeugverzögerung gelangt durch die hierbei erfolgende, etwa waagrechte Verlagerung der Kopfstütze die an der Tragstange vorgesehene Schraube in Bezug auf den gehäuseseitigen Anschlag außer Eingriff, wodurch die Tragstange und damit die Kopfstütze durch die Wirkung der sich hierbei entspannenden Druckfeder aus der Ruhelage in eine hochgestellte Wirklage verlagert wird.

Aufgabe der Erfindung ist es daher, eine an einer Mittelarmlehne vorgesehene Kopfstütze der im Oberbegriff des Patentanspruchs 1 genannten Art derart auszubilden, dass sie in einfacher Weise jedoch stets zuverlässig in die Wirklage gebracht wird.

Zur Lösung der Aufgabe sind die im Patentanspruch 1 dargelegten Merkmale vorgesehen.

Bei einer über zwei Tragstangen höhenverlagerbaren, sich an einer Mittelarmlehne befindenden Kopfstütze sind die Tragstangen vorteilhafterweise jeweils von einer Druckfeder umgeben, die mit Vorspannung gegen die Kopfstütze wirken. Diese liegt dabei in ihrer Wirklage an einem Anschlag der Tragstangen an. Erfindungsgemäß ist der Durchmesser der die Tragstangen umgebenden Aufnahmebohrungen in der Kopfstütze derart bemessen und diese so federbeaufschlagt, dass sie bei der sich in Gebrauchslage befindender Mittelarmlehne an zwei, schräg gegenüberliegenden Eckbereichen der Aufnahmebohrungen an jeweils einer Tragstange anliegt. Befindet sich die Mittelarmlehne in Hochschwenklage, so wird die Kopfstütze um eine Fahrzeugquerachse verschwenkt, so dass die Aufnahmebohrungen etwa koaxial zu den Tragstangen verlaufen und dadurch die Kopfstütze federbelastet in die Wirklage verlagert wird. Schließlich steht mit jeder Tragstange ein Arretierelement in derart reib- oder formschlüssiger (über Tangentialnuten) Verbindung, dass bei einem Fahrzeugcrash durch die hierbei erfolgende Verschwenkung der Kopfstütze die zwischen dem Arretierelement und der Tragstange bestehende Arretierung aufgehoben und dadurch die Kopfstütze durch die Wirkung der vorgespannten Druckfedern in ihre Wirklage verlagert wird (Merkmale der Patentansprüche 1 und 2).

Zweckmäßigerweise erstreckt sich der freie Endabschnitt der Tragstangen in Gebrauchslage der Mittelarmlehne abgewinkelt zum Sitzteil der Rücksitzbank hin (Merkmal des Patentanspruchs 3).

Ein Ausführungsbeispiel der Erfindung ist in der Zeichnung dargestellt und wird im folgenden erläutert. Es zeigt:
- Figur 1: einen Vertikalschnitt der Rücksitzbank eines Personenkraftwagens im Bereich einer hoch- und niederschwenkbaren Mittelarmlehne,
- Figur 2: eine perspektivische Darstellung des freien Endbereichs der Mittelarmlehne in ihrer Gebrauchslage.

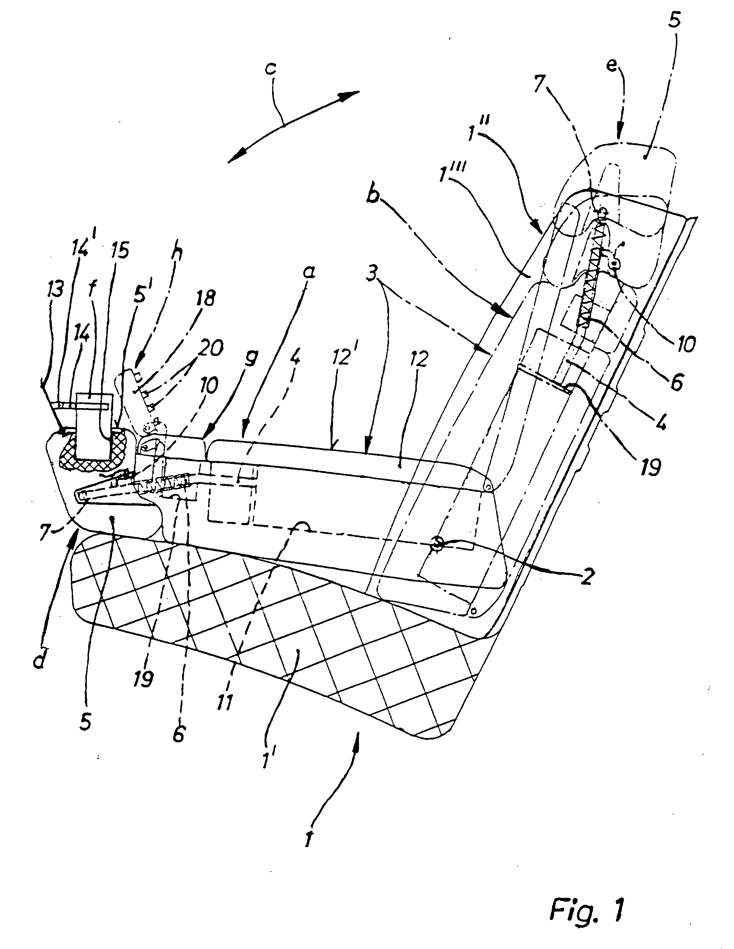

Die in Figur 1 dargestellte Rücksitzbank 1 eines Personenkraftwagens besteht aus einem Sitzteil 1' und aus einer Rückenlehne 1", in deren Längsmittelbereich eine lotrecht verlaufende Ausnehmung 1"' vorgesehen ist. In dieser ist über einen Schwenkbolzen 2 eine Mittelarmlehne 3 in den Richtungen des Doppelpfeils c schwenkbar gelagert. Gleichermaßen kann sich die Mittelarmlehne 3 auch zwischen zwei einzelnen Rückenlehnen der Rücksitzbank 1 befinden. In Figur 1 ist die etwa waagrechte Gebrauchslage a der Mittelarmlehne 3 mit durchgezogenen Linien dargestellt, während die Hochschwenklage b der Mittelarmlehne 3 mit strichpunktierten Linien veranschaulicht ist; dabei befindet sich die Mittelarmlehne in der mittigen Ausnehmung 1"' der Rückenlehne 1". Durch eine im Bereich des Schwenkbolzens 2 vorgesehene Arretiereinrichtung wird die Mittelarmlehne 3 in Hochschwenklage b durch eine Fliehkraftverriegelung im Crashfall schwenkfest gehalten.

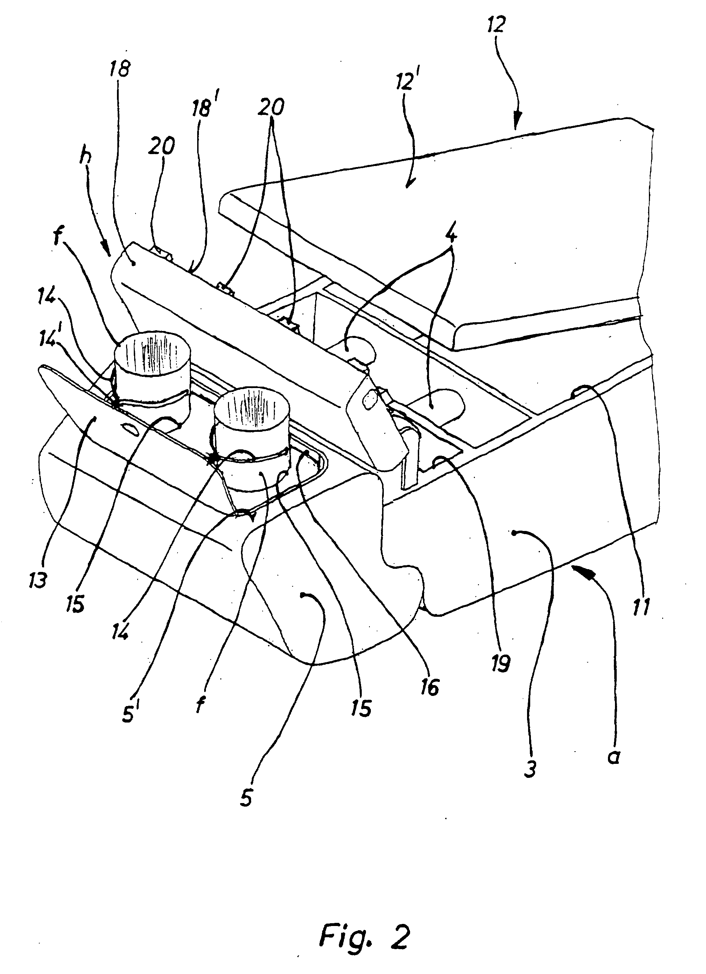

Wie in den Figuren 1 und 2 ersichtlich, sind am freien Endbereich der Mittelarmlehne 3 zwei, in Abstand voneinander liegende Tragstangen 4 angeordnet, an deren freien, über die Stirnseite der Mittelarmlehne 3 hinausragenden Endabschnitten eine Kopfstütze 5 längsverschiebbar vorgesehen ist. Dabei ist jede Tragstange 4 von einer Druckfeder 6 umgeben, die sich mit ihrer innenliegenden Stirnseite an der Mittelarmlehne 3 abstützen, mit ihrer freien Stimseite dagegen mit Vorspannung gegen die Kopfstütze 5 wirken. Hierdurch kann diese durch die Wirkung der Druckfedern 6 von der mit durchgezogenen Linien dargestellten Ruhelage d in die mit strichpunktierten Linien dargestellte Wirklage e (Figur 1) verlagert werden, wie im folgenden erläutert wird. Dabei liegt die Kopfstütze 5 an einem von der Tragstange 4 radial abstehenden Anschlag'7 an. Die in der Kopfstütze 5 vorgesehenen Aufnahmebohrungen umgeben jeweils eine Tragstange 4 mit Radialspiel. Damit die Kopfstütze 5 in möglichst einfacher und bequemer Weise verlagert werden kann, ist der Durchmesser der die Tragstangen 4 umgebenden Aufnahmebohrungen in der Kopfstütze 5 derart bemessen und diese so von den Druckfedern 6 beaufschlagt, daß die Kopfstütze 5 bei sich in Gebrauchslage a befindender Mittelarmlehne 3 an zwei schräg gegenüberliegenden Eckbereichen der Aufnahmebohrungen an jeweils einer Tragstange 4 anliegt und dadurch in Ruhelage d gehalten wird. Bei sich in Hochschwenklage b befindender Mittelarmlehne 3 wird die Kopfstütze 5 lediglich soweit um eine über ihre Längserstreckung verlaufende Achse verschwenkt, bis die Aufnahmebohrungen etwa koaxial zu den Tragstangen 4 verlaufen. Daraufhin wird die Kopfstütze 5 durch die Wirkung der Druckfedern 6 in die Wirklage e verlagert.

Falls übersehen wird, die Kopfstütze 5 bei sich in Hochschwenklage b befindender Mittelarmlehne 3 manuell in die Wirklage e zu verlagern, ist hierfür an der Kopfstütze 5 ein federbelastetes Arretierelement 10 vorgesehen. Dieses steht in derart reib- oder formschlüssiger Verbindung mit der Tragstange 4, daß bei einem Crash die zwischen dem Arretierelement 10 und der Tragstange 4 bestehende Arretierung aufgehoben wird und dadurch die Kopfstütze 5 durch die Wirkung der Druckfedern 6 in ihre Wirklage e verlagert wird. Wie in Figur 1 ersichtlich, verläuft der freie, von der Druckfeder 6 umgebene Endabschnitt der Tragstangen 4 in Gebrauchslage a der Mittelarmlehne 3 abgewinkelt zum Sitzteil 1' der Rücksitzbank 1 hin, so daß die Kopfstütze 5 in ihrer Wirklage e und bei sich in Hochschwenklage b befindender Mittelarmlehne 3 nahe am Kopf eines auf der Rücksitzbank 1 sitzenden Fahrzeuginsassens liegt.

In den Figuren 1 und 2 ist schließlich zu ersehen, daß in der Mittelarmlehne 3 ein Stauraum 11 zur Aufnahme diverser Kleinteile vorgesehen ist. Dabei ist der Stauraum 11 von einem im Bereich des Schwenkbolzens 2 an der Mittelarmlehne 3 schwenkbar gelagerten Deckel 12 überdeckbar, dessen Oberseite 12' bei geschlossenem Deckel 12 und sich in Gebrauchslage a befindender Mittelarmlehne 3 (Figur 1) als eine Armauflagefläche für einen auf der Rücksitzbank 1 sitzenden Fahrzeuginsassen dient. Ferner ist an der Rückseite 5' der Kopfstütze 5 ein Schwenkdeckel 13 hoch-und niederschwenkbar angelenkt, der in Schließlage etwa oberflächenbündig zur Oberseite 12' des Deckels 12 verläuft. Dabei sind an der Innenseite des Schwenkdeckels 13 zwei nebeneinander liegende Halteeinrichtungen 14 für jeweils einen Getränkebehälter f über ein Gelenk 14' angelenkt. Damit die Getränkebehälter f während der Fahrzeugfahrt zuverlässig gehalten sind, greifen sie mit ihrem unteren Ende jeweils in eine an der Kopfstütze 5 vorgesehene Vertiefung 15 ein. Femer ist an der Rückseite 5' der Kopfstütze 5 eine im Bereich der Vertiefungen 15 verlaufende und von der Rückseite 5' zurückversetzte Ausnehmung 16 ausgebildet, in die der Deckel 13 in seiner Schließlage mit den Halteeinrichtungen 14 eingreift.

Schließlich ist am freien Endbereich der Mittelarmlehne 3 ein plattenförmiges Schwenkteil 18 hoch- und niederschwenkbar angelenkt, das in Einschwenklage g (Figur 1) etwa oberflachenbundig zur Oberseite 12' des Deckels 12 verläuft und dabei einen Hohlraum 19 überdeckt. Bei sich in Gebrauchslage a befindender Mittelarmlehne 3 kann das Schwenkteil 18 in die Ausschwenklage h verlagert werden, in der es der Kopfstütze 5 zugewandt ist (Figur 2). Dabei sind auf der Innenseite 18' des Schwenkteils 18 eine Vielzahl von Betätigungselementen 20 vorgesehen, die bequem vom Fahrzeuginsassen betätigt werden können. Die Betätigungselemente 20 können beispielsweise elektrische, pneumatische oder hydraulische Schaltelemente sein.

## Patentansprüche

1. Rücksitzbank (1) in einem Kraftfahrzeug mit einer zwischen einer Gebrauchslage (a) und einer etwa lotrechten Position verschwenkbaren Mittelarmlehne (3), die an ihrer freien Stirnseite eine von zwei Tragstangen (4) gehaltene Kopfstütze (5) trägt, welche durch die Wirkung wenigstens einer Druckfeder (6) aus einer Ruhelage (d) in eine Wirklage (e) bringbar ist, **dadurch gekennzeichnet, dass** beide Tragstangen (4) jeweils von einer sich an der Mittelarmlehne abstützenden Druckfeder (6) umgeben sind, die mit Vorspannung gegen die Kopfstütze (5) wirken, wobei der Durchmesser der die Tragstangen (4) umgebenden Aufnahmebohrungen in der Kopfstütze (5) derart bemessen ist, dass
- bei sich in Gebrauchslage (a) befindender Mittelarmlehne (3) die Aufnahmebohrungen durch die Wirkung der Druckfedem (6) über zwei schräg gegenüberliegende Eckbereiche gegen jeweils eine Tragstange (4) gepresst werden, wobei sich die Kopfstütze (5) in Ruhelage (d) befindet, während
- bei sich in Hochschwenklage (b) befindender Mittelarmlehne (3) und einer Verschwenkung der die Kopfstütze (5) um eine über ihre Längserstreckung verlaufende Achse die Aufnahmebohrungen etwa koaxial zu den Tragstangen (4) verlaufen, wodurch schließlich die Kopfstütze (5) durch die Wirkung der Druckfedern (6) in die Wirklage (e) verlagert wird.

2. Rücksitzbank nach Anspruch 1,
**dadurch gekennzeichnet, dass** mit mindestens einer Tragstange (4) ein an der Kopfstütze (5) vorgesehenes, federbelastetes Arretierelement (10) in derart reib- oder formschlüssiger Verbindung steht, dass die Kopfstütze (5) bei einem Crash durch die Wirkung der Druckfedern (6) in ihre Wirklage (e) verlagert wird.

3. Rücksitzbank nach Anspruch 1,
**dadurch gekennzeichnet, dass** der freie, von der Druckfeder (6) umgebene Endabschnitt der Tragstangen (4) in Gebrauchslage (a) der Mittelarmlehne (3) zum Sitzteil (1') der Rücksitzbank (1) hin abgewinkelt verläuft.

## Claims

1. A back seat bench (1) in a motor vehicle, comprising a central arm rest (3) movable between an operative position (a) and an approximately vertical position and, at its free end face, bearing a head rest (5) held on two supporting rods (4) and movable from an inoperative position (d) into an operative position (e) by action of at least one pressure spring (6),
**characterised in that** each supporting rod (4) is surrounded by a pressure spring (6) which abuts the central arm rest and is biased against the head rest (5), wherein the diameter of the receiving bores surrounding the supporting rods (4) in the head rest (5) is so dimensioned that
- when the central arm rest (3) is in the operative position (a), the receiving bores are pressed by action of the pressure springs (6) over two obliquely opposite corner regions against respective supporting rods (4), while the head rest (5) is in the inoperative position (d), whereas
- when the central arm rest (3) is in the swung-up position (b) and the shaft extending longitudinally through the head rest (5) is tilted, the receiving bores extend approximately coaxially with the supporting rods (4), with the result finally that the head rest (5) is moved into the operative position (e) by action of the pressure springs (6).

2. A rear seat bench according to claim 1,
**characterised in that** a spring-loaded locking element (10) provided on the head rest (5) is frictionally or positively connected to at least one supporting rod (4) so that in the event of a crash the head rest (5) is moved into its operative position (e) by action of the pressure springs (6).

3. A rear seat bench according to claim 1,
**characterised in that** when the central arm rest (3) is in the operative position (a), the free end portion of the supporting rods (4) surrounded by the pressure spring (6) extends at an angle to the seat part (1') of the rear seat bench (1).

## Revendications

1. Banquette arrière (1) d'un véhicule automobile, comprenant un accoudoir central (3), pouvant basculer entre une position d'utilisation (a) et une position sensiblement verticale et portant sur sa face frontale libre un appui-tête (5) qui est maintenu par deux tiges porteuses (4) et qui peut être amené d'une position de repos (d) à une position active (e), au moins par un ressort (6)
**caractérisée en ce que**
les deux tiges porteuses (4) sont entourées chacune par un ressort de poussée (6) en appui sur l'accoudoir et agissant en précontrainte sur l'appui-tête (5), le diamètre des alésages de réception entourant les tiges porteuses (4) à l'intérieur de l'appui-tête étant dimensionné de manière que :
- quand l'accoudoir central (3) est en position d'utilisation (a) les alésages de réception sont, par l'action de ressorts de poussée (6) appliqués en pression, par deux zones d'angle inclinées l'une par rapport à l'autre, chacun sur la tige porteuse correspondante (4), l'appui-tête (5) se trouvant alors en position de repos (d),
- quand l'accoudoir central (3) est en position relevée (b) un basculement de l'appui-tête (5) autour d'un axe orienté selon sa direction longitudinale amène les logements de réception à être à peu près coaxiaux aux tiges porteuses (4), de sorte qu'alors l'appui-tête (5) est amené par l'action des ressorts (6) à sa position active (e).

2. Banquette arrière de véhicule selon la revendication 1,
**caractérisé en ce qu'**
un élément d'arrêt (10) sous contrainte élastique, prévu sur l'appui-tête (5) présente avec au moins une tige porteuse (4), une liaison verrouillée par friction ou combinaison de formes telle qu'en cas de crash, l'action des ressorts de poussée (6) amène l'appui-tête à sa position active (e).

3. Banquette arrière de véhicule selon la revendication 1,
**caractérisé en ce que**
l'extrémité libre des tiges porteuses (4) qu'entourent les ressorts de poussée (6), quand l'accoudoir central (3) est en position d'utilisation (a), est coudée vers l'assise (1') de la banquette arrière (1).
